# EUROPÄISCHE PATENTANMELDUNG

(11) **EP 0 556 154 A1**
(43) Veröffentlichungstag der Anmeldung: **18.08.1993**
(21) Anmeldenummer: 93810064.1
(22) Anmeldetag: 02.02.1993
(51) Int. Cl.: B65H 75/22, B65H 75/28, F16B 21/07

(54) **Kunststoffspule für ein Wickelgut**

(30) Priorität: 05.02.1992 CH 336/92
(71) Anmelder: iwe-Spulentechnik GmbH, D-94465 Neustadt bei Coburg (DE)
(72) Erfinder: Isler, Herbert, CH-5603 Staufen (CH); Schmidt, Karl-Günter, W-8630 Coburg (DE)
(74) Vertreter: Münch, Otto

(57) **Zusammenfassung**

Die Spule umfasst einen zweiteiligen, hohlzylindrischen Kern (2) und bedseits je einen Flansch (3). Flansch (3) und Kern (2) sind in Umfangs- und Radialrichtung formschlüssig ineinander gesteckt und durch mindestens vier lösbare Verbindungselemente pro Flansch (3) miteinander verbunden. Durch diese Ausbildung können zwischen Flansch (3) und Kern (2) hohe Kräfte und Momente übertragen werden, so dass auch grössere Spulendurchmesser aus Kunststoff gebaut werden können.

## Beschreibung

Aus der DE-PS 37 12 680 ist eine Kunststoffspule bestehend aus einem zweiteiligen Kern und zwei Flanschen bekannt. Die Kernhälften greifen in Achsrichtung formschlüssig in Umfangsnuten einer an den Flanschen angeformten Nabe ein. In Umfangsrichtung ist der Eingriff kraftschlüssig. Die Flansche werden durch durchgehende Zuganker gegen die Kernhälften verspannt.

In der DE-OS 2 245 595 wird vorgeschlagen, Kunststoffspulen aus Guss-Polyamid durch in-situ-Polymerisation herzustellen. Hier ist der Kern mit einem rohrförmigen Ansatz in eine Ringnut der Flansche eingesteckt, also in Radialrichtung formschlüssig. Die Flansche werden ebenfalls durch Zuganker gegeneinander gespannt.

Aus der FR-PS 1 219 868 ist es ferner bekannt, bei einer Kunststoffspule die Kernhälften in Umfangsrichtung formschlüssig mit den Flanschen zu verbinden. Zur Verbindung in Radialrichtung dienen abgefederte, kegelstumpfförmige Bolzen, die in konische Ansenkungen in den Kernhälften einrasten.

Aus der DE-OS 28 22 213 ist eine weitere Kunststoffspule bestehend aus einem hohlzylindrischen Kern und zwei Flanschen bekannt. Der Kern ist zweiteilig ausgeführt und greift in Achsrichtung formschlüssig in die Flansche ein. Zur formschlüssigen Verbindung in Radial- und Umfangsrichtung dienen Steckbolzen, die in die Flansche eingesteckt sind, einen axial vorstehenden Ring der Kernhälften hintergreifen und gegenüber radialen Rippen des Kerns als Mitnehmer wirken. Mit dieser Verbindungsart können allerdings nur bescheidene Momente übertragen werden.

Allen diesen Spulen ist gemeinsam, dass sie in mindestens einer Richtung nur relativ bescheidene Kräfte zwischen Flanschen und Kern zu übertragen vermögen. Die bekannten Spulen eignen sich daher nicht für grössere Spulendurchmesser und deshalb einem erheblichen Gewicht des Wickelgutes.

Der vorliegenden Erfindung liegt die Aufgabe zugrunde, eine Kunststoffspule derart auszubilden, dass sie sich auch für grössere Spulendurchmesser eignet. Diese Aufgabe wird durch die Merkmalskombination gemäss den Ansprüchen gelöst.

Nachfolgend werden Ausführungsbeispiele der Erfindung anhand der Zeichnung erläutert. Darin zeigt:
- Figur 1: Eine perspektivische Darstellung einer Spule,
- Figur 2: eine Stirnansicht einer Kernhälfte,
- Figur 3: eine Stirnansicht in Richtung des Pfeils III in Figur 2 in kleinerem Massstab,
- Figur 4: eine Stirnansicht eines Teils eines Flansches,
- Figur 5: eine Aussenansicht des Flansches,
- Figur 6: eine Ansicht einer Klemmeinrichtung,
- Figur 7: einen Schnitt längs der Linie VII-VII in Figur 6,
- Figur 8: einen Schnitt durch die Verbindung zwischen Flansch und Kern,
- Figur 9: einen Schnitt längs der Linie IX-IX in Figur 8,
- Figur 10: einen Ausschnitt eines Axialschnittes durch eine Schnecke,
- Figur 11: eine zweite Ausführungsform eines Kern,
- Figur 12: eine Ansicht einer Variante des Flansches.

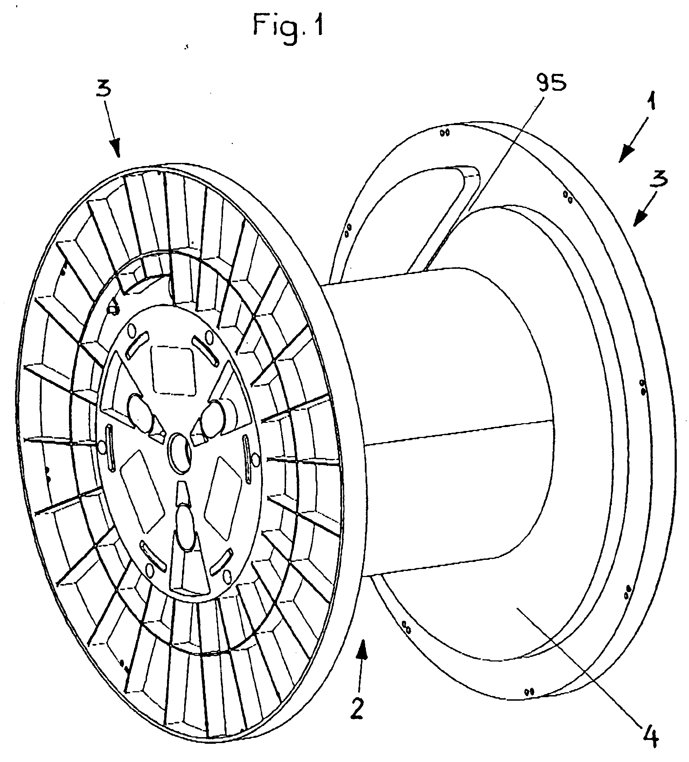

Die Spule 1 nach Figur 1 besteht aus einem Kern 2, zwei identischen Flanschen 3 und wahlweise zusätzlich einer zwischen dem einen Flansch 3 und dem Kern 2 eingesetzten Schnecke 4. Der Kern 2 ist längs einer die Spulenachse 5 enthaltenden Ebene in zwei Kernhälften 6 geteilt. Die Kernhälften 6, die Flansche 3 und die Schnecke 4 sind aus einem hochfesten Kunststoff gegossen, vorzugsweise aus einem Nylon Block-Copolymer, zum Beispiel aus "NYRIM" (eingetragenes Warenzeichen). NYRIM wird in flüssiger Form aus drei Komponenten gemischt und dann bei annähernd atmosphärischem Druck in eine Form gegossen. Die Form hat Entlüftungsbohrungen. Bei der anschliessend durch einen beigemischten Katalysator ausgelösten Polymerisation entsteht ein Ueberdruck von bloss etwa 0,3 bar. Im Gegensatz zu Spritzgiessverfahren, welche hohe Drücke erfordern, können mit diesem Giessverfahren auf einfachen Werkzeughaltern auch grossflächige Teile hergestellt werden. NYRIM hat eine hohe Zähigkeit, gute Abrasionseigenschaften und gute chemische- und Temperaturbeständigkeit und ist voll recyklierbar, wobei ein Granulat aus NYRIM ein hochwertiges Material zum Spritzgiessen darstellt. Bei der Wiederverwertung des eingesetzten Materials wird bei der Sekundärstufe Primärqualität erreicht.

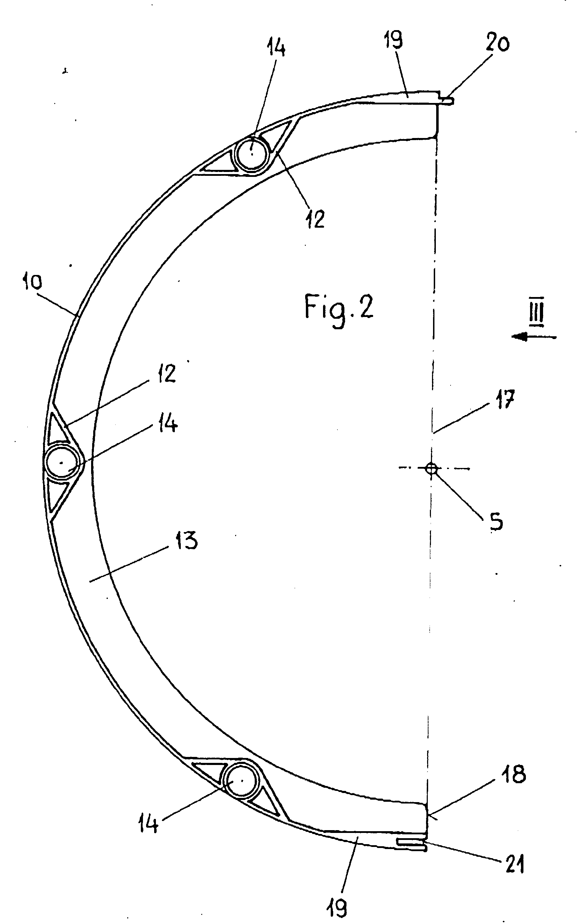

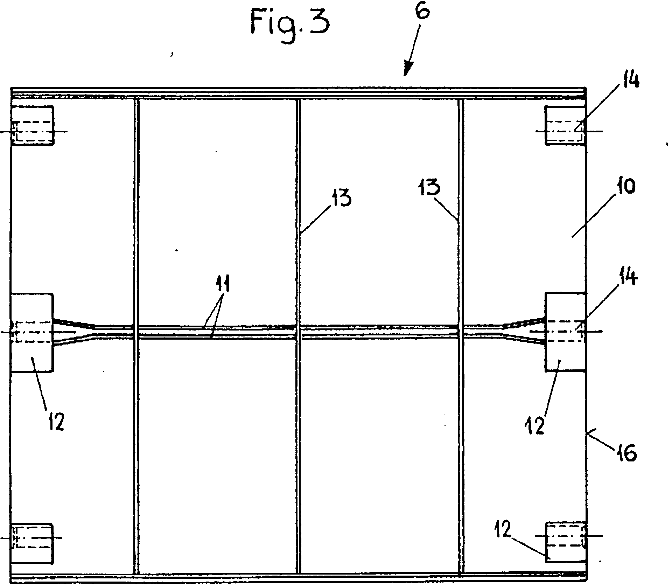

In Figuren 2 und 3 ist eine der beiden identischen Kernhälften 6 dargestellt. Sie hat eine zylindrische Wand 10, an deren Innenseite zwei achsparallel verlaufende Längsrippen 11 sowie je nach Länge des Kerns 2 zwei oder mehr in Umfangsrichtung verlaufende Versteifungsrippen 13 angeformt sind. An den beiden Stirnenden sind je drei Verdickungen 12 mit achsparallelen, zylindrischen Bohrungen 14 angeformt. Die Bohrungen 14 sind gegen die Stirnflächen 16 hin offen. Die Wand 10 ist gegen die die Achse 5 enthaltende Trennebene 17 hin auf beiden Seiten verdickt. An der in der Trennebene 17 liegenden Berührungsfläche 18 ist auf der einen Seite an der Verdickung 19 eine achsparallele, durchgehende Feder 20 angeformt. Die andere Verdickung 19 hat eine achsparallele Nut 21 gleicher Breite.

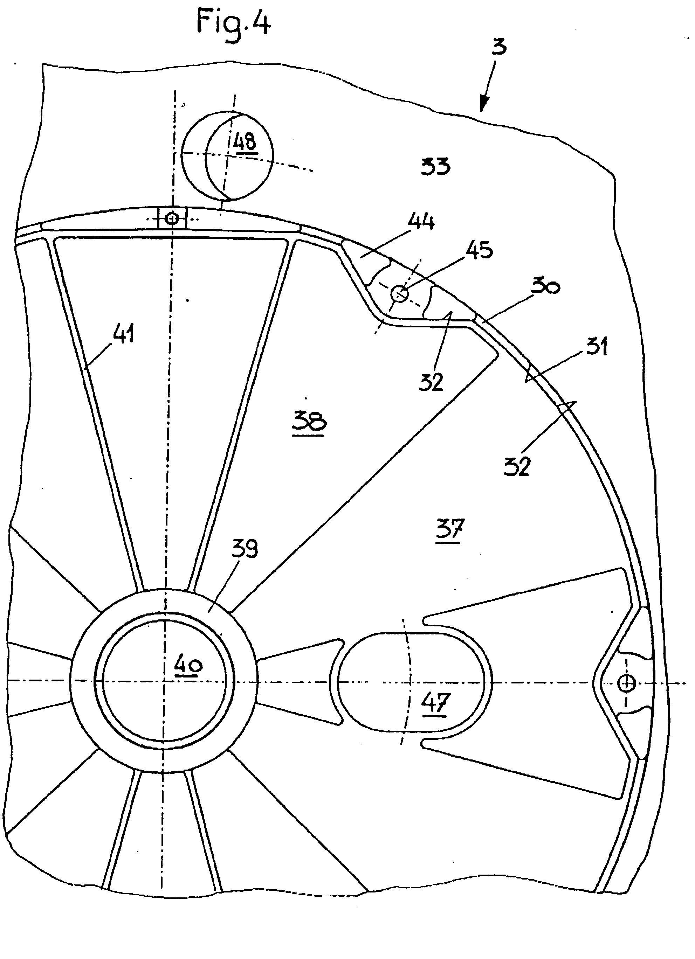

In Figur 4 ist ein Teil der Innenseite eines Flansches 3 dargestellt. Der Flansch 3 hat eine Umfangsnut 30 mit einer kreiszylindrischen äusseren Flanke 31 und einer unrunden, der Innenkontur des zusammengesetzten Kerns 2 angepassten inneren Flanke 32. In diese Nut 30 wird das Stirnende des Kerns 2 eingesteckt und ist dann in Umfangs- und Radialrichtung formschlüssig mit dem Flansch 3 verbunden. Dadurch können zwischen Flansch 3 und Kern 2 hohe Kräfte und Momente übertragen werden. Damit kann die Spule auch mit grösserem Durchmesser gebaut werden, für welche bisher Kunststoffspulen nicht eingesetzt werden konnten. Um einen spielfreien Eingriff zwischen Kern 2 und Flansch 3 zu erreichen, können die Stirnenden des Kerns 2 und die Nut 30 im Axialschnitt leicht keilförmig ausgebildet werden.

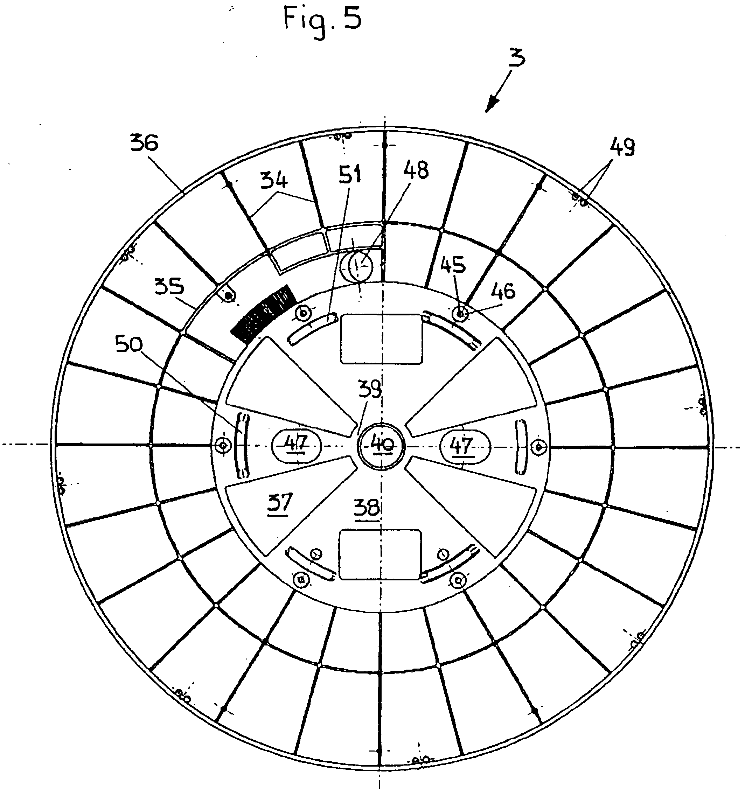

Radial ausserhalb der Nut 30 hat der Flansch 3 eine glatte, ebene Innenwand 33, die auf der Aussenseite durch radiale Rippen 34 und eine zylindrische Rippe 35 versteift ist (Figur 5). Längs der Peripherie ist an der Wand 33 ein axial nach aussen abstehender, zylindrischer Reifen 36 angeformt. Innerhalb der Nut 30 ist der Flansch 3 durch sektorartige Vertiefungen 37 und Erhöhungen 38 zu einer Nabe 39 mit einer Durchgangsbohrung 40 hin versteift. Zwei gegenüberliegende dieser Erhöhungen 38 erstrecken sich über einen grösseren Winkelbereich und dienen zum Anbringen einer Beschriftung, zum Beispiel zur Kennezeichnung des Kabeltyps und des Spulenherstellers. Diese breiteren Erhöhungen 38 sind durch weitere Radialrippen 41 versteift.

In den zur Aufnahme der Verdickungen 12 dienenden Verbreiterungen 44 der Nut 30 sind sechs Durchgangsbohrungen 45 mit zylindrischen Ansenkungen 46 von der Aussenseite her vorgesehen, die mit den Bohrungen 14 des eingesetzten Kerns 2 fluchten. Zwei Langlöcher 47 dienen zum Einsetzen eines Mitnehmers zum Antrieb oder zum Bremsen der Spule auf einem durch die Naben 39 gesteckten Dorn. In der Wand 33 ist ausserhalb der Nut 30 eine Oeffnung 48 zum wahlweisen Herausführen des Kabelanfangs vorgesehen. Ferner sind längs der Peripherie mehrere Paare von Bohrungen 49 zum Festbinden des Kabelendes über den Umfang verteilt. Auf der Aussenseite hat der Flansch 3 drei kreisbogenförmige Vorsprünge 50 und drei kreisbogenförmige Vertietiefungen 51. Diese dienen zum formschlüssigen Eingriff aufeinander gestapelter Spulen. Die Vorsprünge 50 laufen beidseits keilförmig aus, um die Verletzungsgefahr bei drehender Spule zu reduzieren. Die Vertiefungen 51 sind weniger tief als die Vorsprünge 50 hoch. Dadurch haben die beiden aneinander anliegenden Flansche voneinander einen Griffabstand.

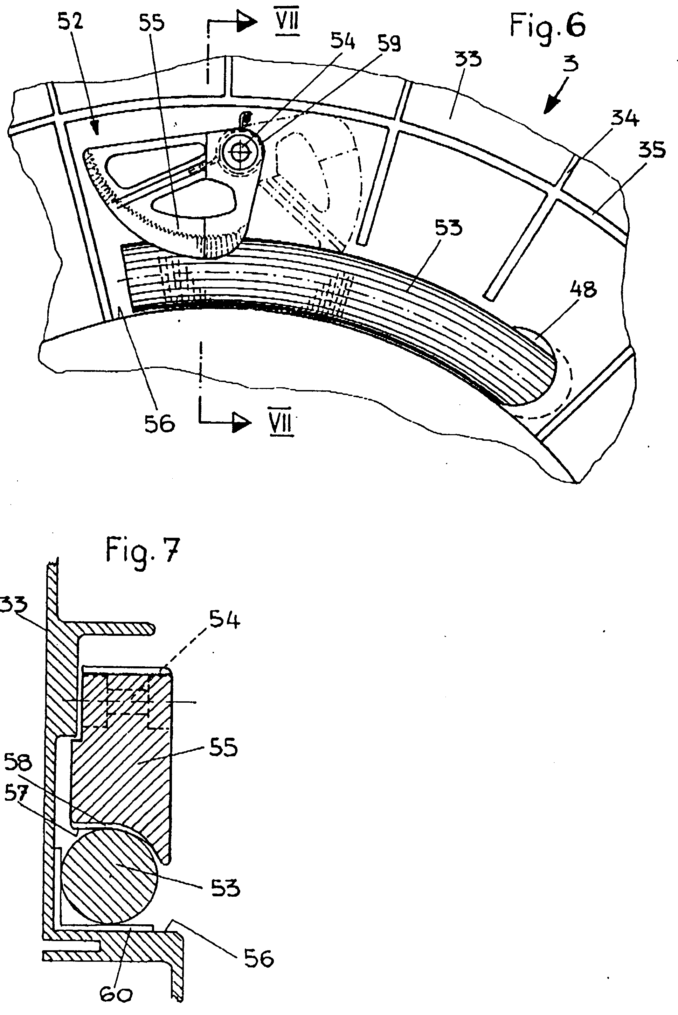

In den Figuren 6 und 7 ist eine Klemmeinrichtung 52 zum Festklemmen eines aus der Oeffnung 48 herausgeführten Kabelanfangs 53 dargestellt. Auf einer Achse 54 ist ein Klemmhebel 55 schwenkbar gelagert. Der Hebel 55 hat an der Peripherie eine spiralförmige, gegen die Wand 33 und eine zylindrische Fläche 56 offene Nut 57 mit kleinen Rippen 58. Die Nut 57 wird gegen aussen enger. Der Hebel 55 ist durch eine Feder 59 in der Darstellung nach Figur 6 im Gegenuhrzeigersinn belastet. Die Fläche 56 und die Wand 33 haben im Bereich des Hebels 55 ebenfalls kleine Rippen 60. Zum Festklemmen des Kabelanfangs 53 wird der Hebel 55 zunächst manuell im Uhrzeigersinn geschwenkt und der Kabelanfang 53 unter den Hebel 55 eingeführt. Beim Loslassen des Hebels 53 wird er durch die Feder 59 gegen den Kabelanfang 53 angepresst. Bei Zug auf das Kabel wird dieses wegen der spiralförmigen Nut 57 eingekeilt und sicher gehalten. Die sich gegen das Hebelende verengende Nut ermöglicht das problemlose Klemmen unterschiedlicher Kabeldurchmesser.

Die Klemmeinrichtung 52 kann natürlich auch bei andern Spulen oder in andern Anwendungen sinnvoll zum Festklemmen von strangförmigem Gut eingesetzt werden, zum Beispiel von Seilen, Rohren oder Profilen.

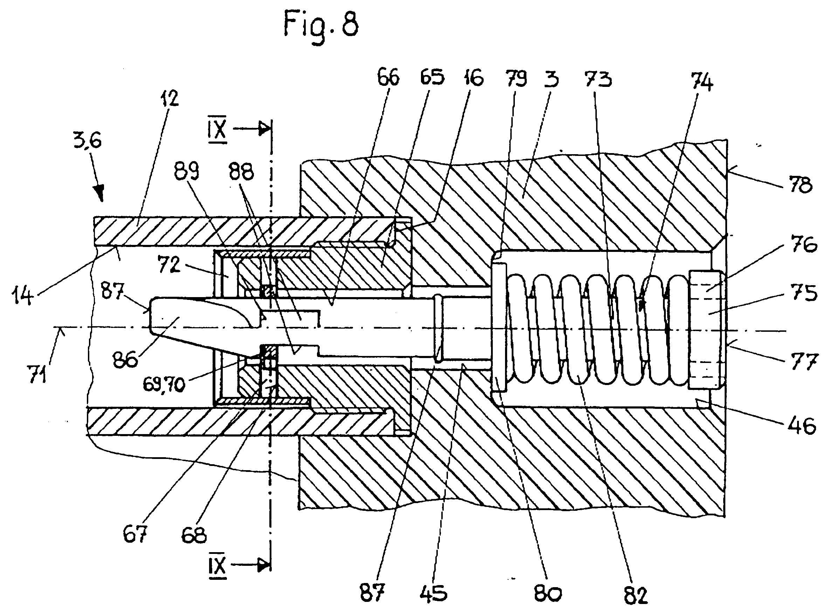

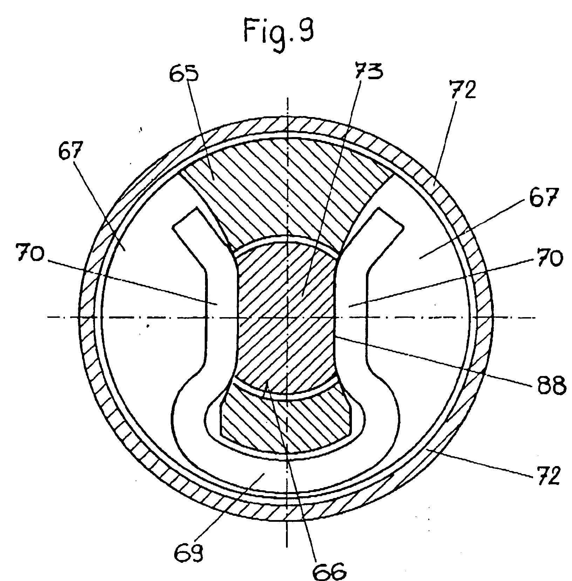

In Figuren 8 und 9 ist die axiale Befestigung des Flansches 3 am Kern 2 dargestellt. In die Bohrungen 14 ist ein metallener Einsatz 65 mit einer Durchgangsbohrung 66 eingeschraubt. Benachbart dem inneren Ende sind in den Einsatz 65 zwei Schlitze 67 mit einer radialen, ebenen Schulter 68 eingefräst. In die Schlitze 67 ist ein Federbügel 69 aus Federstahldraht mit rechteckigem Querschnitt eingeschnappt. Die beiden Schenkel 70 des Bügels 69 liegen an den Schultern 68 an. Der Bügel 69 kann noch durch eine Hülse 72 gesichert sein. Die Hülse 72 kann auch am stirnseitigen Ende geschlossen sein. In diesem Fall eignet sich der Einsatz 65 auch zum Eingiessen. Durch die Bohrung 45 des Flansches 3 ist der Schaft 73 eines Bolzens 74 durchgesteckt. Der Bolzen 74 hat am äusseren Ende einen Kopf 75 mit achsparallelen Bohrungen 76 zum Einstecken eines Spezialschlüssels. Im montierten Zustand ist die Stirnfläche 77 des Kopfs 75 etwa bündig mit der Stirnfläche 78 des Flansches 3. Auf dem Grund 79 der Ansenkung 46 liegt eine Unterlagsscheibe 80 an, die durch einen Sprengring 81 unverlierbar auf dem Schaft 73 gehalten ist. Zwischen dem Kopf 75 und der Scheibe 80 ist eine Druckfeder 82 gespannt.

Das innere Ende des Schaftes 73 ist unterhalb der Achse 71 im montierten Zustand, oberhalb der Achse 71 um 90 Grad gedreht gezeichnet. Der Schaft 73 hat zwei gegenüberliegende, gegen das Stirnende 87 verjüngte Keilflächen 86 und mit Abstand vom Stirnende 87 zwei Quernuten 88. Die dem Stirnende 87 benachbarte Schulter 89 dieser Nuten 88 ist leicht hinterschnitten, damit die Schenkel 70 sicher in den Nuten 88 einrasten. Zur Montage wird der Bolzen 74 durch die Bohrungen 45, 66 durchgesteckt, bis die Keilflächen 86 an den Schenkeln 70 anstehen. Dabei ergibt sich die korrekte Drehstellung des Bolzens 74 von selbst. Nun wird mit einem Hammer auf den Kopf 75 geschlagen, so dass der Federbügel 69 gespreizt und die Feder 82 gespannt wird. Die Schenkel 70 rasten in den Nuten 88 ein. Zur Demontage wird mit einem Spezialschlüssel, der in die Bohrungen 76 des Kopfes 75 eingreift, der Bolzen 74 um 90 Grad gedreht, sodass die Schenkel 70 wiederum gespreizt werden und der Bolzen 74 durch die Kraft der Feder 82 herausgedrückt wird.

Die beschriebene Verbindung ermöglicht eine äusserst rasche Montage durch ungeschultes Personal und trotzdem eine in engen Grenzen festlegbare axiale Verbindungskraft, die auch über längere Zeit und trotz allfälligem Kriechen von Material konstant bleibt.

Dem gegenüber erfordert zum Beispiel die Schraubverbindung mit Drehmomentenschlüsseln bedeutend mehr Zeit und geschultes Personal und erreicht bei weitem nicht die Konstanz und Präzision der Verbindungskraft wie die beschriebene Verbindung.

Die Verbindung kann leicht automatisiert werden, indem die Bolzen 64 zum Beispiel mittels Stempeln eingedrückt werden. Die beschriebene Verbindung kann natürlich mit gleichen Vorteilen auch zum Verbinden anderer Bauteile als Kern und Flansch einer Spule eingesetzt werden.

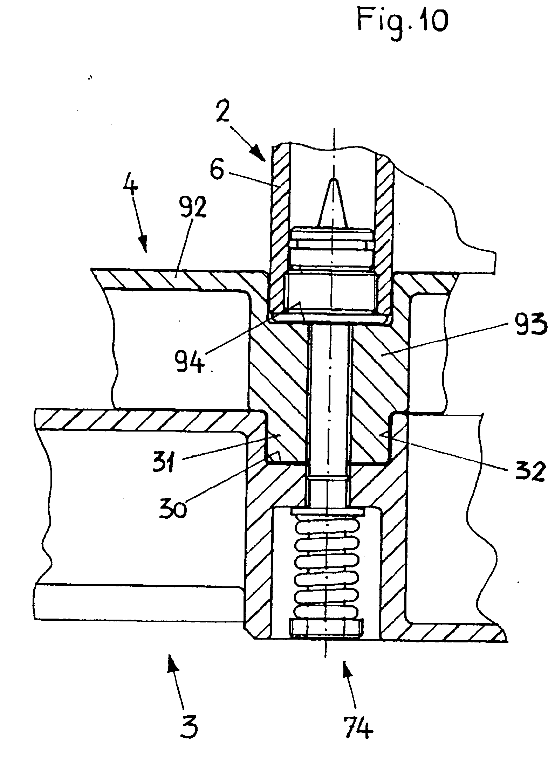

In Figur 10 ist ein Teil eines Axialschnittes durch die montierte Schnecke 4 dargestellt. Die Schnecke 4 hat eine Ebene, dem Innenraum der Spule 1 zugewandte Wand 92, welche auf der Rückseite durch nicht dargestellte Rippen verstärkt ist. Die Wand 92 geht innen in einen rohrförmigen Ansatz 93 über. Der Ansatz 93 hat eine Nut 94, die identisch ausgebildet ist wie die Nut 30 des Flansches 3 und in welche der Kern 2 eingesteckt ist. Am andern Stirnende hat der Ansatz 93 die identische Form wie das Stirnende des Kerns 2. Mit diesem Stirnende ist der Ansatz 93 in die Nut 30 eingesteckt. An der Stelle der Verdickungen 12 hat der Ansatz 93 achsparallele Durchgangsbohrungen. Ein Kanal 95 erstreckt sich tangential vom Innendurchmesser aus und geht bogenförmig tangential in den Aussenumfang über.

Wenn die Schnecke eingesetzt werden soll, werden entsprechend längere Bolzen 74 verwendet. Die beschriebene Art der Verbindung der Schnecke 4 hat den Vorteil, dass der Innenraum der Spule 1 mit und ohne Schnecke 4 bei gleicher Kernlänge gleich ist. Die Montage der Schnecke erfordert kaum zusätzlichen Aufwand.

Wenn der Kabelanfang durch die Oeffnung 48 durchgeführt werden soll, wird zweckmässig die Schnecke 4 weggelassen.

Da die wenigen Metallteile der Spule 1 sämtliche leicht demontierbar sind, kann die Spule, wenn sie beschädigt sein sollte, sortenrein entsorgt werden, was die Wiederverwertung erheblich erleichtert.

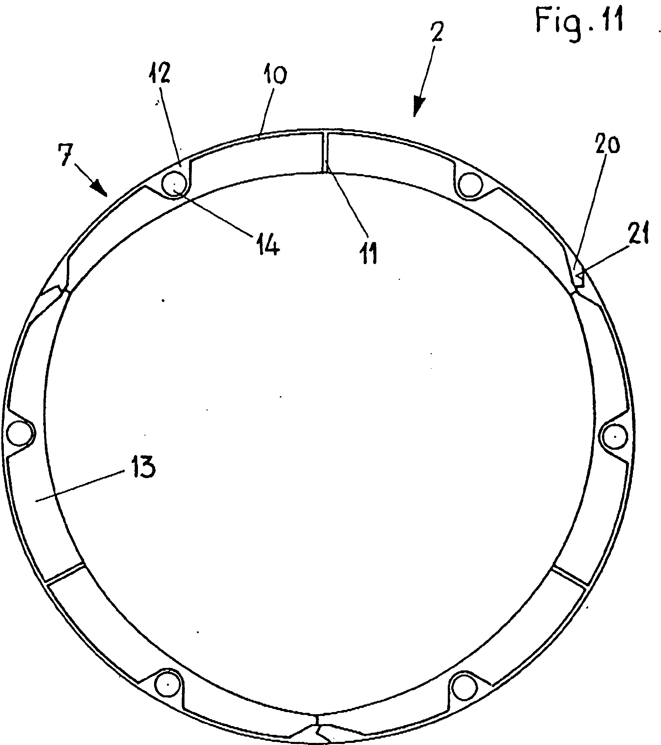

In Figur 11 ist eine Variante des Kerns 2 dargestellt, bei welcher dieser aus drei Kerndritteln 7 besteht. Für analoge Teile sind gleiche Bezugszeichen verwendet, so dass sich eine detaillierte Beschreibung dieser Teile erübrigt. Der Innenradius der radialen Rippen 13 ist hier gleich dem Aussenradius der Wand 10. Dadurch sind die Kernsegmente 6 gut stapelbar. Für die Ausführungsform nach Fig. 11 ist die Giessform preiswerter herstellbar. Der demontierte Kern nach Figur 11 ist auf kleinerem Raum lagerbar als der Kern 2 nach Fig. 2 und 3.

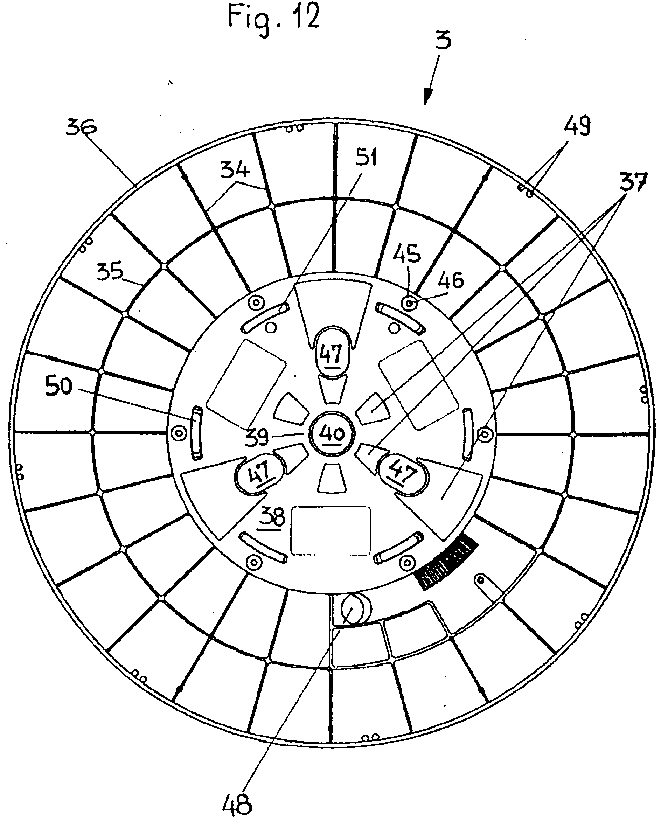

Der Flansch 3 nach Figur 12 ist für den dreiteiligen Kern 2 nach Figur 11 geeignet. Auch hier sind analoge Teile mit gleichen Bezugszeichen versehen.

## Patentansprüche

1. Spule aus Kunststoff für ein Wickelgut, insbesondere für Kabel, umfassend:
einen hohlzylindrischen Kern (2), der aus mehreren auf ihrer Aussenseite kreiszylindersegmentförmigen Kernteilen (6) besteht,
je einen an den beiden Stirnenden des Kerns (2) angeordneten Flansch (3), der in Radial- und Umfangsrichtung formschlüssig in das betreffende Stirnende des Kerns (2) eingreift, und
mindestens vier lösbare Verbindungselemente (64) pro Flansch (3), die den Flansch (3) in Achsrichtung mit dem Kern (2) verbinden.

2. Spule nach Anspruch 1, wobei die Kernteile (6) längs ihren Berührungsflächen (18) in Radialrichtung formschlüssig ineinander greifen.

3. Spule nach Anspruch 2, wobei an jeder Berührungsfläche (18) der eine Kernteil (6) eine in Achsrichtung verlaufende Nut (21) und der anschliessende Kernteil (6) eine in die Nut (21) eingreifende, angeformte Feder (20) aufweist.

4. Spule nach einem der Ansprüche 1-3, wobei jedes Verbindungselement einen achsparallelen Bolzen (74) umfasst mit einem Kopf (75) und einem Schaft (73), wobei der Kopf (75) Schlüsseleingriffselemente (76) zum Drehen des Bolzens (74) und der Schaft (73) an dem dem Kopf gegenüberliegenden Ende zwei Keilflächen (86) und zwei einander diametral gegenüberliegende, senkrecht zur Bolzenachse (71) verlaufende Quernuten (88) aufweist, wobei zwischen dem Kopf (75) und einer auf den Schaft (73) aufgeschobenen Unterlagsscheibe (80) eine Feder (82) eingesetzt ist, und wobei an jeder Verbindungsstelle in den Kern (2) ein Einsatz (65) eingesetzt ist, der mit Abstand voneinander zwei Federelemente (70) trägt, die bei eingesetzten Bolzen in die Quernuten (88) eingreifen.

5. Spule nach Anspruch 4, wobei die Unterlagsscheibe (80) unverlierbar auf dem Schaft (73) gehalten ist.

6. Spule nach Anspruch 4 oder 5, wobei die Federelemente aus zwei Schenkeln (70) eines Bügels (69) aus Federstahldraht mit rechteckigem Querschnitt gebildet sind und der Bügel (69) in ausgefräste Nuten (67) des Einsatzes (65) eingeschnappt ist.

7. Spule nach einem der Ansprüche 1-6, wobei mindestens einer der Flansche (3) benachbart dem Aussenumfang des Kerns (2) eine Kabeldurchtrittsöffnung (48) aufweist, und wobei benachbart dieser Kabeldurchtrittsöffnung (48) ein federbelastetes Klemmelement (52) am Flansch schwenkbar gelagert ist, das eine spiralförmige Nut (57) zum Einklemmen eines durch die Kabeldurchtrittsöffnung (48) durchgeführten Kabelanfangs (53) aufweist.

8. Spule nach einem der Ansprüche 1-7, wobei jeder Flansch (3) eine nach einer Stirnseite offene Nut (30) mit einer annähernd kreiszylindrischen äusseren Flanke (31) und einer unrunden, der Innenkontur des Kerns (2) angepassten inneren Flanke (32) aufweist, und wobei der Kern (2) mindestens mit einer ersten Stirnseite in diese Nut (30) eingesteckt ist.

9. Spule nach einem der Ansprüche 1-8, wobei auf der Innenseite des einen Flansches (3) eine aus Kunststoff bestehende Schnecke (4) mit einem Kanal (95) zum Herausführen des inneren Endes des Wickelgutes befestigt ist.

10. Spule nach den Ansprüchen 8 und 9, wobei die Schnecke (4) an einer Stirnseite eine weitere Umfangsnut (94) aufweist, die identisch ausgebildet ist wie die Nut (30) der Flansche (3), und wobei der Kern (2) mit seiner zweiten Stirnseite in diese weitere Umfangsnut (94) eingesteckt ist.
